# EUROPEAN PATENT APPLICATION

(11) **EP 2 306 303 A1**
(43) Date of publication of application: **06.04.2011**
(21) Application number: 09794517.4
(22) Date of filing: 10.07.2009
(51) Int. Cl.: G06F 3/153, G06T 11/80, G09G 5/00, H04N 1/00

(54) **COMMUNICATION TERMINAL, CONTROL METHOD, AND CONTROL PROGRAM**

(30) Priority: 11.07.2008 JP 2008181452
(71) Applicant: Sharp Kabushiki Kaisha, Osaka-shi, Osaka 545-8522 (JP)
(72) Inventor: KUMAGAI, Masayuki, Osaka-shi Osaka 545-8522 (JP)
(74) Representative: Treeby, Philip David William
(86) International application number: PCT/JP2009/062581
(87) International publication number: WO 2010/005073

(57) **Abstract**

A communication terminal (100) includes: an output unit (111) including a display; an input unit (110A) for inputting first operation information; a communication device (101) for transmitting the first operation information to the other communication terminal via the network and receiving second operation information from the other communication terminal via the network; a first output control unit (106A) for causing the display to output first information, based on the first operation information, in a first area (107A) of the display when the first operation information is input, and for causing the display to output second information, based on the second operation information, in the first area of the display when the second operation information is received; and a comparison unit (106J) for comparing a time at which the first operation information is input plus a predetermined period of time with a time at which the second operation information is received, and causing the output unit to output third information based on a result of the comparing.

## Description

### TECHNICAL FIELD

The present invention relates generally to a communication terminal connectable to another communication terminal on a network, a control method and a control program, and particularly to a communication terminal, a control method and a control program capable of outputting to users useful information based on first operation information input and second operation information received from the other communication terminal.

### BACKGROUND ART

Conventionally, a handwriting communication application has been known that allows users to draw simultaneously at their respective terminals. When the handwriting communication application is used by different users who draw at the same time and at the same position, their respective communication terminals will as a result display different drawings, respectively. This is because each communication terminal displays the drawing information that is transmitted from a partner, later by its transmission time than the drawing information that is input by the user of the communication terminal, resulting in graphical drawings overlapping differently.

For handwriting communication applications, whether that communication terminals provide resultant, different drawings is a problem or not depends on how they are utilized. For example, when a user who desires to send a message by handwriting utilizes a drawing to do so, the handwritten message is only required to be legible, and it does not matter if a locus handwritten by the user himself/herself may underlie that handwritten previously by a partner and thus be displayed. In contrast, if users write their names, messages and the like or provide similar handwritten loci on a photographic image, such as for a collection of messages, and share the resultant drawing, however, the users' unawareness that their respective communication terminals provide different, resultant drawings could cause a problem.

If the users can recognize that their respective communication terminals provide different, resultant drawings, the users can be aware of the necessity of synchronization processing and also consult each other about which one of the different, resultant drawings should be given a priority for storage. If the users do not have such recognition, i.e., if the users erroneously believe that their respective communication terminals output the same resultant drawing, however, then there is a possibility that when a first user reuses a resultant drawing stored in a second user's communication terminal, the stored resultant drawing may be different from that which the first user expects. Alternatively, when users do some work while storing resultant drawings to their respective communication terminals, there is a possibility that each user may not notice that the user's communication terminal and another communication terminal provide different, resultant drawings until the drawings are completed.

Such disadvantage is resolved by a technique disclosed for example in Japanese Patent Laying-open No. 3-284053 (patent document 1) as a drawing communication terminal. More specifically, Japanese Patent Laying-open No. 3-284053 (patent document 1) discloses a drawing communication terminal including a delay command input means operated when inputting handwritten information via a drawing input means ends, and a storage means operative in response to the delay command input means being operated for storing the handwritten information and successively storing to a cumulative storage means a delay command and a time elapsing before subsequent handwritten information is input. The drawing communication terminal detects the delay command following handwritten information in reproduction, and accordingly, delays displaying subsequent handwritten information by the time.

Japanese Patent Laying-open No. 11-347254 (patent document 2) discloses a communication game system. More specifically No. 11-347254 (patent document 2) discloses that the communication game system includes a plurality of game units each including: an input means for inputting first operation data that operates a character displayed on a screen; a communication control unit operative whenever a predetermined synchronization time is reached for transmitting the first operation data to another game unit and also receiving second operation data transmitted from the other game unit; and an operation unit processing the first and second operation data whenever a predetermined synchronization time is reached, and when the communication control unit does not receive the second operation data at the predetermined synchronization time, the operation unit refrains from processing the first and second operation data.

### PRIOR ART DOCUMENTS

### PATENT DOCUMENTS

Patent document 1: Japanese Patent Laying-open No. 3-284053
Patent document 2: Japanese Patent Laying-open No. 11-347254

### SUMMARY OF THE INVENTION

### PROBLEMS TO BE SOLVED BY THE INVENTION

Conventional communication terminals, however, delay processing operation information input thereto, and a period of time will be taken after a user inputs operation information to a communication terminal before the communication terminal outputs information having the operation information reflected therein. In other words, the user must wait after the user inputs the operation information before the communication terminal outputs information having the operation information reflected therein. Conventional communication terminals thus lose realtimeness, and the users may feel uncomfortable for delayed displaying.

The present invention has been made to overcome such a disadvantage, and it contemplates a communication terminal, a control method and a control program that can maintain realtimeness and also allow the user of the communication terminal to recognize that the state of an output of the communication terminal is different from that of an output of a partner communication terminal when the former is different from the latter.

### MEANS FOR SOLVING THE PROBLEMS

The present invention in one aspect provides a communication terminal connectable to another communication terminal via a network. The communication terminal includes: an output unit including a display; an input unit for inputting first operation information; a communication device for transmitting the first operation information to the other communication terminal via the network and receiving second operation information from the other communication terminal via the network; a first output control unit for causing the display to output first information, based on the first operation information, in a first area of the display when the first operation information is input, and for causing the display to output second information, based on the second operation information, in the first area of the display when the second operation information is received; and a comparison unit for making a comparison between a time when a predetermined time has passed since the communication terminal received the first operation information and a time when the communication terminal receives the second operation information, and causing the output unit to output third information based on a result of the comparison.

Preferably, the communication terminal further includes a second output control unit for causing the display to output the first information at a second area of the display when the time at which the first operation information is input plus the predetermined period of time is reached, and for causing the display to output information, based on the second operation information, at the second area of the display when the second operation information is received.

The present invention in another aspect provides a control method in a communication terminal connectable to another communication terminal via a network, the communication terminal including an output unit including a display, an input unit, a communication device, and a control unit. The control method includes the steps of: the control unit receiving first operation information input via the input unit; the control unit causing the display to output first information, based on the first operation information, in a first area of the display; the control unit transmitting the first operation information to the other communication terminal through the communication device; the control unit receiving second operation information from the other communication terminal through the communication device; the control unit causing the display to output second information, based on the second operation information, in the first area of the display; the control unit making a comparison between a time when a predetermined time has passed since the communication terminal received the first operation information and a time when the communication terminal receives the second operation information; and the control unit causing the output unit to output third information based on a result of the comparison.

The present invention in still another aspect provides a control program for controlling a communication terminal connectable to another communication terminal via a network, the communication terminal including an output unit including a display, an input unit, a communication device, and a control unit. The control program causes the control unit to perform the steps of: receiving first operation information input via the input unit; causing the display to output first information, based on the first operation information, in a first area of the display; transmitting the first operation information to the other communication terminal through the communication device; receiving second operation information from the other communication terminal through the communication device; causing the display to output second information, based on the second operation information, in the first area of the display; making a comparison between a time when a predetermined time has passed since the communication terminal received the first operation information and a time when the communication terminal receives the second operation information; and causing the output unit to output third information based on a result of the comparison.

### EFFECTS OF THE INVENTION

The present invention can thus provide a communication terminal, a control method and a control program that can maintain realtimeness and also allow the user of the communication terminal to recognize that the state of an output of the communication terminal is different from that of an output of a partner communication terminal when the former is different from the latter.

### BRIEF DESCRIPTION OF THE DRAWINGS

Fig. 1 is a schematic diagram showing one example of a network system according to the present embodiment.
Fig. 2 is a sequence diagram outlining an operation in the network system.
Fig. 3 represents how a communication terminal provides displaying in a manner transitioning in accordance with the operation according to the present embodiment, as outlined.
Fig. 4 generally shows an appearance of a mobile phone according to the present embodiment.
Fig. 5 is a block diagram showing a hardware configuration of the mobile phone according to the present embodiment.
Fig. 6 is a flow chart of a procedure of a communication process in the mobile phone according to the present embodiment.
Fig. 7 represents a procedure of a matching process in the network system according to the present embodiment.
Fig. 8 is a block diagram showing a functional configuration of a major functional portion of the communication terminal according to the present embodiment.
Fig. 9 is a flow chart of a procedure of a UI process performed by a comparison unit in the mobile phone according to the present embodiment.
Fig. 10 represents a data structure of buffered operation information input to the comparison unit.
Fig. 11 is a flow chart of a procedure of a disconnection process in the mobile phone according to the present embodiment.

### MODES FOR CARRYING OUT THE INVENTION

Hereinafter reference will be made to the drawings to describe the present invention in an embodiment. In the following description, identical components are denoted by identical reference characters. Their names and functions are also identical. Accordingly, they will not be described repeatedly in detail.

Furthermore, hereinafter, a mobile phone 100 will be referred to as a representative example of a "communication terminal". However, the communication terminal may be a personal computer, a car navigation device (a satellite navigation system), a personal navigation device (PND), a personal data assistance (PDA) or other similar information communication devices.

### <General Configuration of Network System 1>

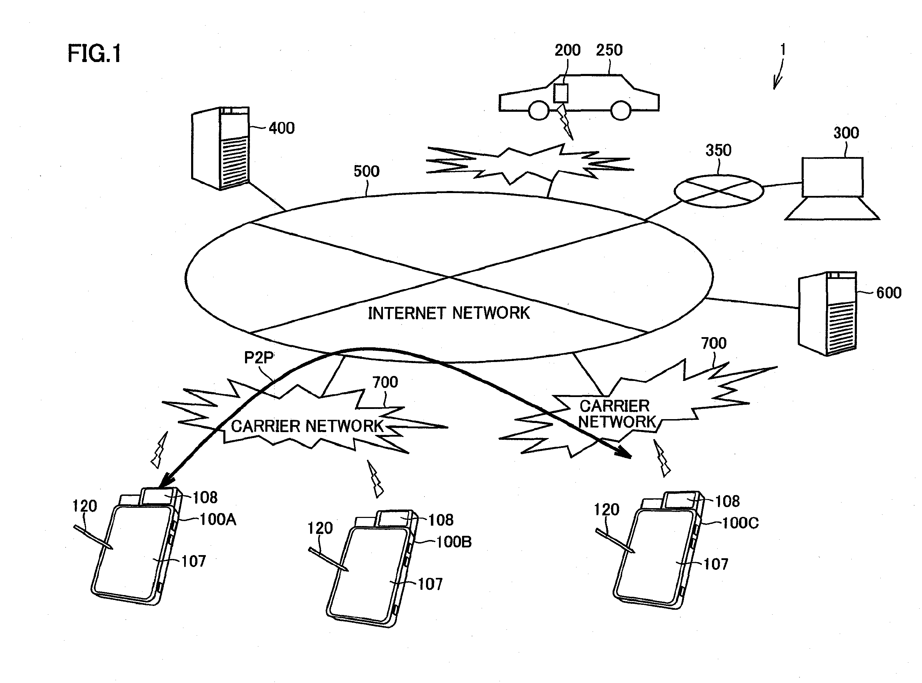

Initially, a network system 1 in a first embodiment will be described. Fig. 1 is a schematic diagram showing one example of network system 1 according to the present embodiment. As shown in Fig. 1, network system 1 includes mobile phones 100A, 100B and 100C, a matching server (a first server device) 400, a mail server (a second server device) 600, an Internet network (a first network) 500, and a carrier network (a second network) 700. Furthermore, network system 1 according to the present embodiment includes a car navigation device 200 mounted in a vehicle 250, and a personal computer (PC) 300.

Note that, to facilitate description, hereinafter, network system 1 according to the present embodiment includes a first mobile phone 100A, a second mobile phone 100B, and a third mobile phone 100C. Furthermore, in describing a configuration, a function or the like common to mobile phones 100A, 100B and 100C, the mobile phones will also collectively be referred to as mobile phone 100. Furthermore, in describing a configuration, a function or the like common to mobile phones 100A, 100B and 100C, car navigation device 200, and personal computer 300, they will also collectively be referred to as a communication terminal.

Mobile phone 100 is configured to be connectable to carrier network 700. Car navigation device 200 is configured to be connectable to Internet network 500. Personal computer 300 is configured to be connectable through a local area network (LAN) 350, a wide area network (WAN) or the like to Internet network 500. Matching server 400 is configured to be connectable to Internet network 500. Mail server 600 is configured to be connectable to Internet network 500 and carrier network 700.

More specifically, first mobile phone 100A, second mobile phone 100B, third mobile phone 100C, car navigation device 200, and personal computer 300 are interconnectable via carrier network 700, mail server 600, Internet network 500 and/or the like and capable of mutually transmitting and receiving data. Furthermore, mobile phone 100, car navigation device 200, and personal computer 300 are assigned identification information such as a mail address, an Internet protocol (IP) address or the like for identifying their own terminals. In other words, mobile phone 100, car navigation device 200, and personal computer 300 can each store identification information of the other communication terminals in its internal storage medium and communicate data, as based on that identification information, with the other communication terminals via carrier network 700, Internet network 500 and/or the like.

Note that mobile phone 100, car navigation device 200, and personal computer 300 according to the present embodiment use their assigned IP addresses to each communicate data with the other communication terminals without depending on mail server 600. Herein, when each communication terminal accesses matching server 400 i.e., when the communication terminal accesses the Internet, the communication terminal is assigned an IP address by matching server 400 or another server device (not shown) for the sake of illustration. The IP address is assigned in a process known in detail, and accordingly, the process will not be described in detail.

Furthermore, mobile phone 100, car navigation device 200, and personal computer 300 according to the present embodiment can use their assigned IP addresses to directly, mutually communicate data on a network. That is, network system 1 according to the present embodiment includes mobile phone 100, car navigation device 200, and personal computer 300 capable of configuring a so-called pear-to-pear (P2P) type network.

### <Outline of Operation of Network System 1>

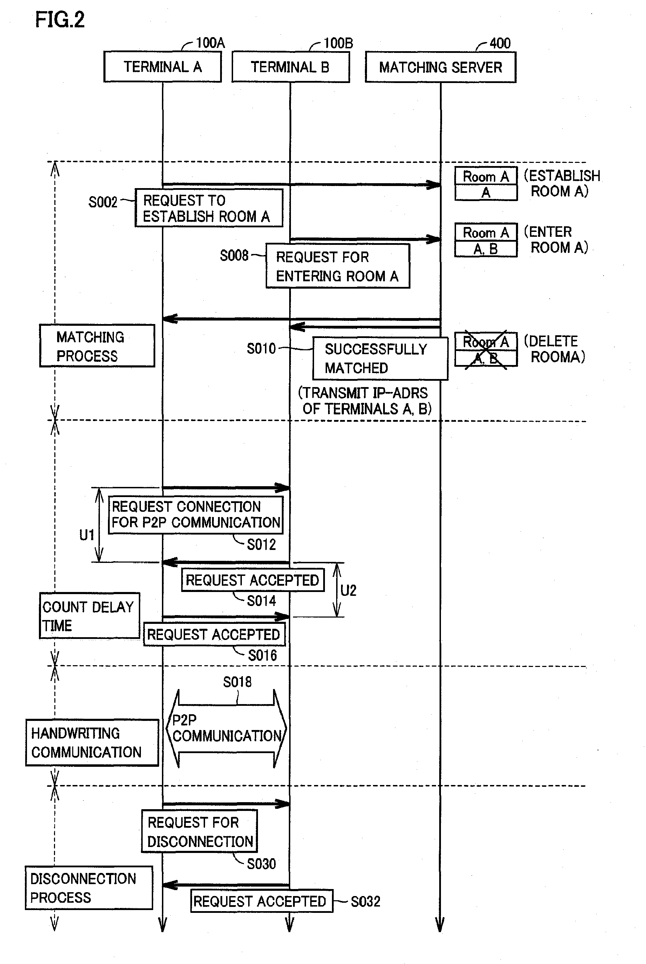

Network system 1 according to the present embodiment generally operates, as will be described hereinafter. Fig. 2 is a sequence diagram showing an outline of an operation in network system 1. As shown in Figs. 1 and 2, the communication terminals according to the present embodiment first need to exchange (or obtain) their IP addresses mutually in order to perform P2P type data communication. Once each communication terminal has obtained an IP address, the communication terminal performs P2P type data communication to transmit a message, an attached file, and/or the like to the other communication terminals.

Hereinafter, however, will be described how each communication terminal transmits/receives messages through a chat room generated by matching server 400, and subsequently performs P2P communication based on each other's IP address.

Initially, first mobile phone 100A (indicated in Fig. 2 as a terminal A) requests IP registration (or login) from matching server 400 (Step S002). First mobile phone 100A may obtain an IP address simultaneously, or may obtain it previously from another server device. More specifically, first mobile phone 100A transmits to matching server 400 via carrier network 700, mail server 600 and Internet network 500 the mail and IP addresses of first mobile phone 100A, the mail address of second mobile phone 100B, and a request to generate a new chat room.

In response to the request, matching server 400 associates the mail address of first mobile phone 100A with the IP address thereof and thus stores the addresses. Matching server 400 generates a room name based on the mail address of first mobile phone 100A and the mail address of second mobile phone 100B, or alternatively, extracts a room name included in the message, and generates a chat room with that room name. Matching server 400 may notify first mobile phone 100A that the chat room has been generated. Matching server 400 associates the room name with the current participant communication terminals' IP addresses and thus stores them.

The user of first mobile phone 100A informs that of second mobile phone 100B that the new chat room has been generated, i.e., the former invites the latter to the chat room. For example, first mobile phone 100A transmits P2P participation request mail to second mobile phone 100B via carrier network 700, mail server 600 and Internet network 500.

When second mobile phone 100B receives the P2P participation request mail, second mobile phone 100B generates a room name based on the mail address of first mobile phone 100A and the mail address of second mobile phone 100B, or alternatively, obtains a room name from the participation request mail, and transmits to matching server 400 the mail and IP addresses of second mobile phone 100B and a message indicating that second mobile phone 100B will enter the chat room having the room name (Step S008). Second mobile phone 100B may obtain an IP address simultaneously, or may initially obtain an IP address and subsequently access matching server 400. At the time, matching server 400 may delete the chat room.

Matching server 400 receives the message and associates the mail address of second mobile phone 100A with the IP address thereof and stores them. Then, matching server 400 signals to first mobile phone 100A that second mobile phone 100B has entered the chat room, and matching server 400 transmits the IP address of second mobile phone 100B to first mobile phone 100A (Step S010). Simultaneously, matching server 400 signals to second mobile phone 100B that matching server 400 has accepted entrance of second mobile phone 100B into the chat room, and matching server 400 transmits the IP address of first mobile phone 100A to second mobile phone 100B.

First mobile phone 100A transmits a P2P connection request message (a starting message) to second mobile phone 100B, based on the IP address of second mobile phone 100B (Step S012). Second mobile phone 100B receives the connection request message, and transmits a first connection acceptance message (an answer message) to first mobile phone 100A, based on the IP address of first mobile phone 100A (Step S014). First mobile phone 100A receives a second connection acceptance message from second mobile phone 100B, and transmits a connection acceptance message to second mobile phone 100B (Step S016).

At the time, first mobile phone 100A measures a period of time U1 that elapses after it transmits the connection request message before it receives the first connection acceptance message, to obtain a period of time t required for transmitting a message from second mobile phone 100B to first mobile phone 100A. Similarly, second mobile phone 100B measures a period of time U2 that elapses after it transmits the first connection acceptance message before it receives the second connection acceptance message, to obtain a period of time t required for transmitting a message from first mobile phone 100A to second mobile phone 100B.

Thus, the first mobile phone 100A and second mobile phone 100B authenticate each other. When the authentication is completed, first mobile phone 100A and second mobile phone 100B start P2P communication (Step S018).

Then, when first mobile phone 100A transmits to second mobile phone 100B a message indicating that P2P communication is severed (Step S030), second mobile phone 100B transmits to first mobile phone 100A a message indicating that second mobile phone 100B has accepted the request to sever the communication (Step S032).

### <Outline of Operation of P2P Communication>

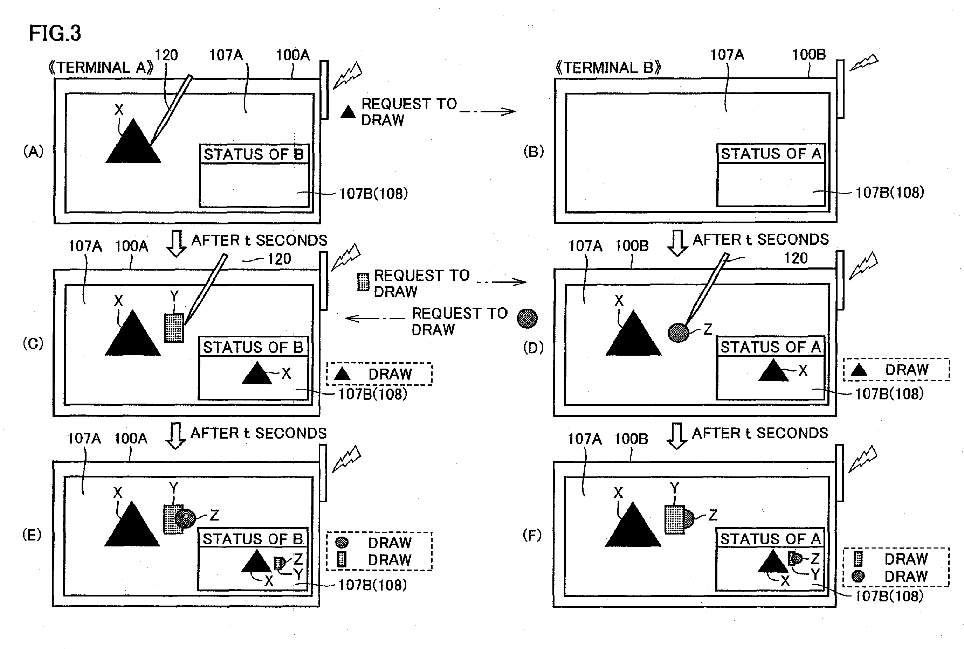

In the present embodiment, network system 1 allows the P2P communication, as will be outlined hereinafter. Fig. 3 represents how a communication terminal provides displaying in a manner transitioning in accordance with the outline of the operation according to the present embodiment. Hereinafter, transmitting graphical information from first mobile phone 100A to second mobile phone 100B requires a transmission time t = ^{U}½ seconds.

Initially, as shown in Fig. 3(A), the user of first mobile phone 100A inputs a graphic X to first mobile phone 100A. In response, first mobile phone 100A causes main display 107 to display graphic X in a first display area 107A and also transmits to second mobile phone 100B information X indicating that graphic X has been input. At the time, second mobile phone 100B has not yet received information X, and, as shown in Fig. 3(B), second mobile phone 100B does not display graphic X.

Subsequently when a period of t seconds elapses, i.e., after first mobile phone 100A has transmitted information X when the period of t seconds elapses, second mobile phone 100B receives information X. As shown in Fig. 3(D), second mobile phone 100B displays graphic X on main display 107 at a first display area 107A and a second display area 107B.

At the time, i.e., after first mobile phone 100A has transmitted information X when the period of t seconds elapses, the user of first mobile phone 100A inputs a graphic Y to first mobile phone 100A, as shown in Fig. 3(C). In response, first mobile phone 100A causes main display 107 to display graphic Y in display area 107A and transmits to second mobile phone 100B information Y indicating that graphic Y has been input. At the time, second mobile phone 100B has not yet received information Y, and second mobile phone 100B does not display graphic Y.

Immediately thereafter, i.e., after first mobile phone 100A has transmitted information X when a period of t + Δt seconds elapses, the user of second mobile phone 100B inputs a graphic Z, as shown in Fig. 3(D). Second mobile phone 100B causes main display 107 to display graphic Z in first display area 107A and also transmits to first mobile phone 100A information Z indicating that graphic Z has been input. At the time, first mobile phone 100A has not yet received information Z, and first mobile phone 100A does not display graphic Z.

Then in network system 1 of the present embodiment after first mobile phone 100A has transmitted information X when a predetermined period of time T elapses, first mobile phone 100A displays graphic X on main display 107 at a second display area, as shown in Fig. 3 (C). Herein the predetermined period of time T satisfies t < T < 2t. When the period of time t required for transmission is fixed, it is preferable that T = 2t - Δt (T ≈ 2t). It should be noted, however, that the period of time t required for transmission varies with the network's condition, the amount of data transmitted, and the like, and accordingly, for example, the predetermined period of time T preferably satisfies 1.5t < T < 1.8t or a similar condition.

After first mobile phone 100A has transmitted information Y when the period of t seconds elapses, second mobile phone 100B receives information Y. As shown in Fig. 3 (F), second mobile phone 100B displays graphic Y on main display 107 at first display area 107A and second display area 107B.

Immediately thereafter, i.e., after second mobile phone 100B has transmitted information Z when the period of t seconds elapses, first mobile phone 100A receives information Z. As shown in Fig. 3 (E), first mobile phone 100A displays graphic Z on main display 107 at first display area 107A and second display area 107B.

Then in network system 1 of the present embodiment after first mobile phone 100A has transmitted information Y when the predetermined period of time T elapses, first mobile phone 100A displays graphic Y on main display 107 at second display area 107B, as shown in Fig. 3 (E). Furthermore, after second mobile phone 100B has transmitted information Z when the predetermined period of time T elapses, second mobile phone 100B displays graphic Z on main display 107 at second display area 107B, as shown in Fig. 3 (F).

Thus, as shown in Fig. 3 (E) and Fig. 3 (F), what is displayd by second mobile phone 100B at first display area 107A and what is displayed by first mobile phone 100A at second display area 107B match. Furthermore, what is displayed by first mobile phone 100A at display area 107A and what is displayed by second mobile phone 100B at second display area 107B match.

That is, the present embodiment provides network system 1 that allows drawing information (or operation information) that is input to a terminal of interest to be delayed by the predetermined period of time T determined as based on the period of time t required for transmission, and to be thereafter displayed in second display area 107B or by a display device to allow the user of each communication terminal to recognize that what is displayed by the communication terminal is different from what is displayed by a partner communication terminal. Furthermore, the present embodiment provides network system 1 allowing a communication terminal of interest to display its input drawing information in another display area 107A or on another display device exactly as it is to allow drawing information that a user has input to be displayed in realtime.

As will be described hereinafter, the configuration allowing the user of each communication terminal to recognize that what is displayed by his/her communication terminal is different from what is displayd by a partner's communication terminal is not limited to the operation outlined as above. For example, a point in time at which a terminal of interest receives drawing information from a partner communication terminal, a point in time at which the terminal of interest receives drawing information input by its user, and the predetermined period of time T may be referred to to determine whether there is a high possibility that what is displayed by the terminal of interest is different from what is displayed by the partner communication terminal, and an alarm may accordingly be displayed or audibly output.

Such function is implemented in a configuration, as will more specifically be described hereinafter.

### <Hardware Configuration of Mobile Phone 100>

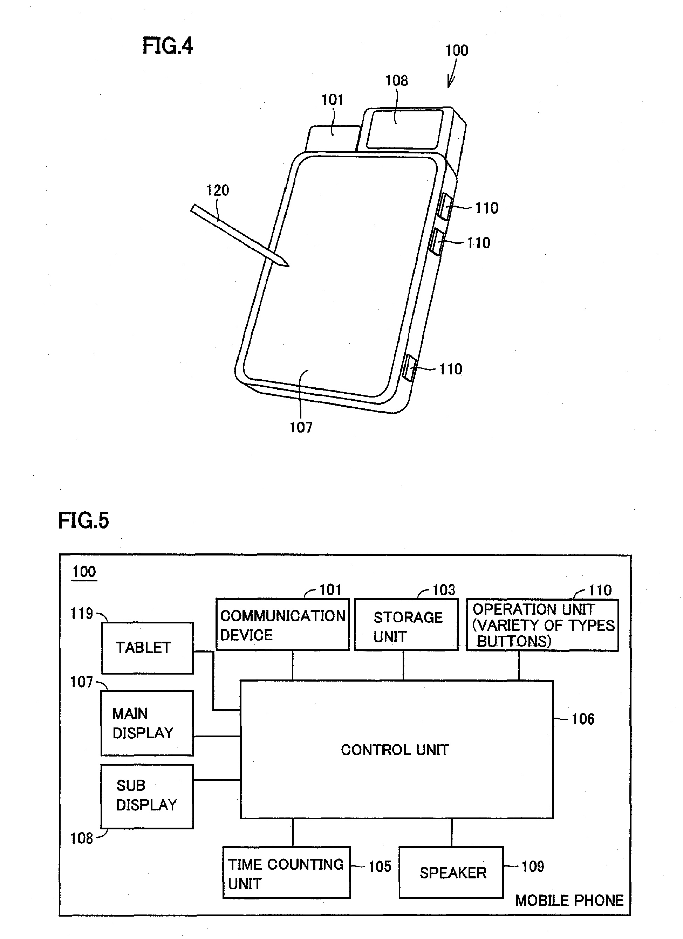

Mobile phone 100 according to the present embodiment has a hardware configuration, as will be described hereinafter. Fig. 4 generally shows an appearance of mobile phone 100 according to the present embodiment. Fig. 5 is a block diagram showing a hardware configuration of mobile phone 100 according to the present embodiment.

As shown in Figs. 4 and 5, mobile phone 100 according to the present embodiment includes a communication device 101 communicating data with an external network, a storage unit 103 storing a program and a variety of types of databases, a control unit 106, a main display 107, a sub display 108, a speaker 109 outputting sound, and an operation unit 110 receiving a variety of types of information input.

Main display 107 according to the present embodiment is a touch panel configured of a liquid crystal panel, a CRT or the like. More specifically, mobile phone 100 according to the present embodiment is provided with a pen tablet 119 under (or at a back side of) main display 107. This allows a user to use a stylus pen 120 or the like to handwrite and thus input graphical information or the like through pen tablet 119 to control unit 106.

Sub display 108 is constituted of a liquid crystal panel, CRT or the like. Main display 107 and sub display 108 display (or output) images and text based on data (information) that control unit 106 outputs, and sub display 108 constitutes a display unit (or output unit) 111.

Operation unit 110 for example has keys operated by a user and thus receives information input by the user via the keys. For example, operation unit 110 includes numeral keys, an enter key and the like, and receives an instruction input to select an address of a partner, a body of mail input, and the like.

Control unit 106 is implemented for example as a central processing unit (CPU) or the like and controls each component of mobile phone 100. For example, control unit 106 receives a variety of types of instructions input by a user operating operation unit 110, and communicates data with an external communication terminal via communication device 101, a network and/or the like.

Communication device 101 receives data to be communicated from control unit 106 and converts the data to a communication signal, and sends the signal from an antenna (not shown). Communication device 101 receives a communication signal through the antenna and converts the signal to communicated data, and inputs the data to control unit 106.

Storage unit 103 is implemented as: random access memory (RAM) functioning as working memory; read only memory (ROM) storing a control program or the like; a hard disk storing drawing information or the like; and the like.

### <Outline of Process by Control Unit 106 of Mobile Phone>

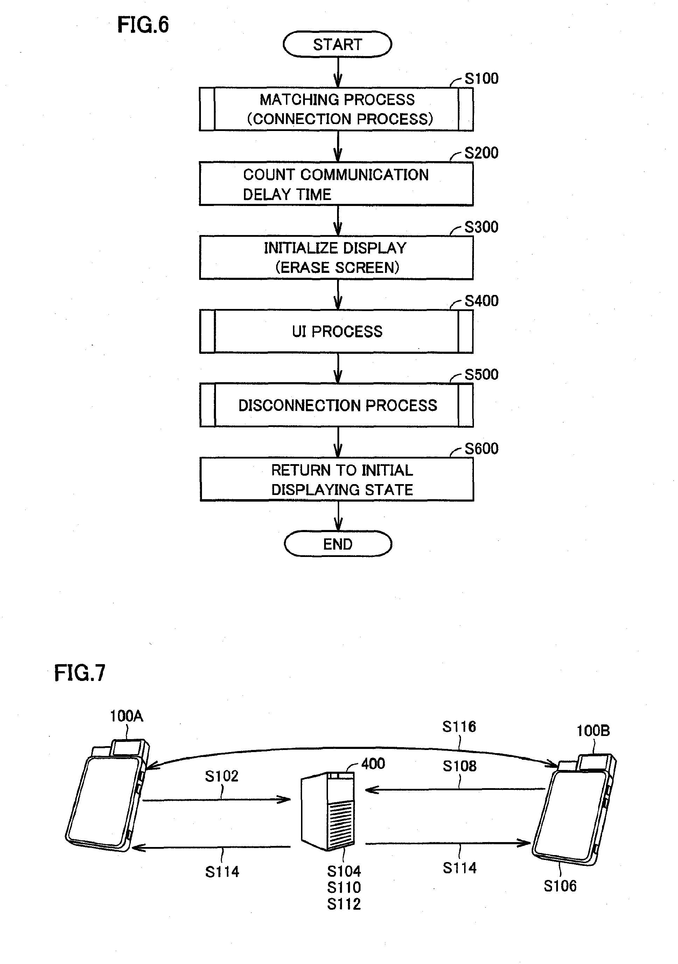

Fig. 6 is a flow chart generally representing a procedure of a process performed in mobile phone 100A by control unit 106 according to the present embodiment.

Initially, control unit 106 employs communication device 101 to perform a matching process with second mobile phone 100B through Internet network 500, carrier network 700, matching server 400 and/or the like (Step S100). The matching process (Step S100) will be described later.

Then, control unit 106 transmits a P2P connection request message to second mobile phone 100B through communication device 101. Control unit 106 receives a connection acceptance message from second mobile phone 100B through communication device 101. Control unit 106 employs a time counting unit 105 to count a second period of time U1 elapsing after the P2P connection request message is transmitted before the connection acceptance message is received. Control unit 106 uses the value of the second period of time U1 to calculate the period of time t required for transmission and the predetermined period of time T (Step S200).

Note that the period of time t required for transmission, as calculated herein, is stored to a delay time 103B1, which is a variable in storage unit 103, to be made available by a delay processing unit 106C (a determination unit 106E), which will be described later.

Then, control unit 106 initializes main display 107 and sub display 108 (Step S300).

Note that herein a flag 103B2 is initialized (or reset). Flag 103B2 is a variable of storage unit 103. Flag 103B2 is used in a comparison unit 106J, as will be described later, and set when it is determined that the state of what is displayed by a communication terminal of interest A and that of what is displayed by a partner terminal B are inconsistent.

Then, control unit 106 performs a UI process (Step S400). The UI process (Step S400) will be described later.

Then, after the UI process (Step S400) is completed, control unit 106 performs a disconnection process (Step S500). The disconnection process (Step S500) will be described later.

Finally, after the disconnection process (Step S500) is completed, control unit 106 initializes main display 107 and sub display 108, and returns them to their respective, initial displaying states (Step S600).

### <Matching Process in Network System 1>

In the present embodiment network system 1 provides a matching process (Step S100), as will be described hereinafter. Fig. 7 represents a procedure of the matching process (Step S100) in network system 1 according to the present embodiment.

As shown in Fig. 7, first mobile phone 100A initially transmits a message through Internet network 500, carrier network 700 and/or the like to matching server 400 to request matching server 400 to establish a rendezvous room A (Step S102). Matching server 400 receives the message and establishes room A. Matching server 400 associates first mobile phone 100A with room A and thus registers first mobile phone 100A as a member (Step S104).

First mobile phone 100A reports to second mobile phone 100B that room A has been established. Second mobile phone 100B receives established rooms' room names from matching server 400, and displays a list of the room names to the user of second mobile phone 100B. Second mobile phone 100B receives an instruction input by the user to select a room name (Step S106).

Second mobile phone 100B issues a request to matching server 400 for entering room A (Step S108). Matching server 400 associates second mobile phone 100B with the room name and thus registers second mobile phone 100B as a member (Step S110). Matching server 400 compares the room's capacity with the number of the current participant communication terminals, and determines whether the number of the current participant communication terminals has reached the capacity. If so, matching server 400 deletes room A (Step S112).

Matching server 400 notifies mobile phone 100A and second mobile phone 100B through Internet network 500, carrier network 700 and/or the like of room A's member list and that a matching has successfully been done (Step S114). First mobile phone 100A and second mobile phone 100B refer to the member list and thus start P2P communication mutually through Internet network 500 and carrier network 700 (Step S116).

### <Content of Control of UI Process>

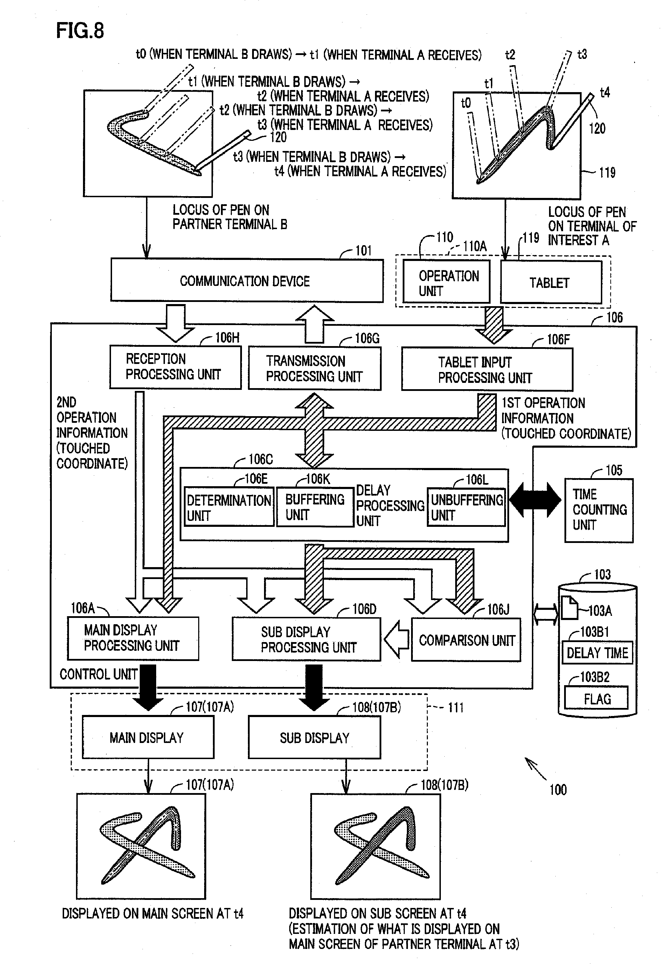

Fig. 8 is a block diagram showing a functional configuration of the UI process (a major functional portion) performed in the communication terminal according to the present embodiment to cause the main display and the sub display to display an operation done to (or a locus of a pen provided through) tablet 119 of the terminal of interest A and that done to a tablet of partner terminal B and transmitted via a communication device. As shown in Fig. 8, the UI process has a software configuration block constituted of a tablet input processing unit 106F, a transmission processing unit 106G, a reception processing unit 106H, delay processing unit 106C, comparison unit 106J, a main display processing unit 106A, and a sub display processing unit 106D.

Tablet input processing unit 106F, transmission processing unit 106G, reception processing unit 106H, delay processing unit 106C, comparison unit 106J, main display processing unit 106A, and sub display processing unit 106D are functions implemented by a CPU (control unit 106) or the like. More specifically, the CPU has each function implemented as the CPU executes a control program stored in storage unit 103 or an external storage medium to control each hardware shown in Fig. 2.

For example, tablet input processing unit 106F, transmission processing unit 106G, reception processing unit 106H, delay processing unit 106C, comparison unit 106J, main display processing unit 106A, and sub display processing unit 106D may be implemented by a control program incorporated in a handwritten-chatting application. In other words, the handwritten-chatting application may implement the functions of tablet input processing unit 106F, transmission processing unit 106G, reception processing unit 106H, delay processing unit 106C, comparison unit 106J, main display processing unit 106A, and sub display processing unit 106D. Alternatively, the control program may be incorporated as a control program separate from their application program for example in an operating system (OS) and may be executed in association with the handwritten-chatting application or independently thereof.

When tablet input processing unit 106F receives operation information input of an operation done to tablet 119 and output therefrom, (i.e., a coordinate, as touched, indicating any single point on tablet 119), tablet input processing unit 106F immediately outputs the operation information to delay processing unit 106C, transmission processing unit 106G, and main display processing unit 106A.

Transmission processing unit 106G receives from tablet input processing unit 106F the operation information of the operation done to tablet 119 and transmits the operation information to partner terminal B through communication device 101.

Delay processing unit 106C receives from tablet input processing unit 106F the operation information of the operation done to tablet 119, delays the operation information by a period of time as stored in delay time 103B1, and thereafter outputs the operation information to sub display processing unit 106D and comparison unit 106J.

Note that while the operation information would be delayed in various methods, the present embodiment will be described for an example employing time counting unit 105 to count (or output) a current time by way of example.

Delay processing unit 106C is constituted of three blocks, i.e., a buffering unit 106K, determination unit 106E, and an unbuffering unit 106L, and buffering unit 106K receives from tablet input processing unit 106F the operation information of the operation done to tablet 119 and buffers the operation information (i.e., stores the operation information to a buffering area (not shown) ensured in storage unit 103), and when a current time (i.e., a time at which delay processing unit 106C receives from tablet input processing unit 106F the operation information input of the operation done to tablet 119) plus a value stored in delay time 103B1 is reached, delay processing unit 106C instructs determination unit 106E to inform unbuffering unit 106L accordingly.

Determination unit 106E, in accordance with the instruction of buffering unit 106K, monitors the current time counted by time counting unit 105, and when the time as instructed (i.e., the time at which the operation information is input + the time of the value of delay time 103B1) is reached, determination unit 106E notifies unbuffering unit 106L accordingly.

Unbuffering unit 106L, in response to the notification received from determination unit 106E, unbuffers the operation information received from tablet input processing unit 106F and indicating the operation done to tablet 119, and buffered, and unbuffering unit 106L outputs the operation information to sub display processing unit 106D and comparison unit 106J.

Then, when reception processing unit 106H receives from partner terminal B through communication device 101 the operation information of an operation done to the tablet of partner terminal B, reception processing unit 106H immediately outputs the operation information to main display processing unit 106A, and sub display processing unit 106D, comparison unit 106J.

In other words, main display processing unit 106A receives the operation information of an operation done to tablet 119 of the terminal of interest A immediately after the user performs the operation, whereas main display processing unit 106A receives the operation information of an operation done to the tablet of partner terminal B immediately after the operation information is received through communication device 101.

On the other hand, sub display processing unit 106D and comparison unit 106J receive the operation information of the operation done to the tablet of partner terminal B, as main display processing unit 106A does, i.e., immediately after the operation information is received through communication device 101, whereas sub display processing unit 106D and comparison unit 106J receive the operation information of the operation done to tablet 119 of the terminal of interest A after the user performed the operation when the time stored in delay time 103B 1 is reached.

Then, main display processing unit 106A and sub display processing unit 106D convert the operation information of the operation done to tablet 119 of the terminal of interest A that is output from reception processing unit 106H, tablet input processing unit 106F and delay processing unit 106C or the operation information of the operation done to the tablet of partner terminal B that is received through communication device 101 (note: the operation information is a coordinate input, as touched in an input coordinate system, for the sake of illustration.) into the displaying coordinate systems respectively of their respectively associated displays (i.e., main display 107 or sub display 108), and main display processing unit 106A and sub display processing unit 106D plot the operation information (or draw a point corresponding to a touched coordinate).

Note that, precisely, a touched coordinate input may be significantly remote from a touched coordinate immediately previously input, and accordingly, it is necessary to determine whether they are operation information input from tablet input processing unit 106F (delay processing unit 106C) or operation information received from reception processing unit 106H and to interpolate the touched coordinate input and the touched coordinate immediately previously input (or draw a line therebetween).

Then, comparison unit 106J monitors the operation information of the operation done to tablet 119 of the terminal of interest A that is output from reception processing unit 106H and delay processing unit 106C or the operation information of the operation done to the tablet of partner terminal B that is received through communication device 101, and comparison unit 106J determines whether the state of what is displayed by the terminal of interest A and that of what is displayed by partner terminal B are inconsistent.

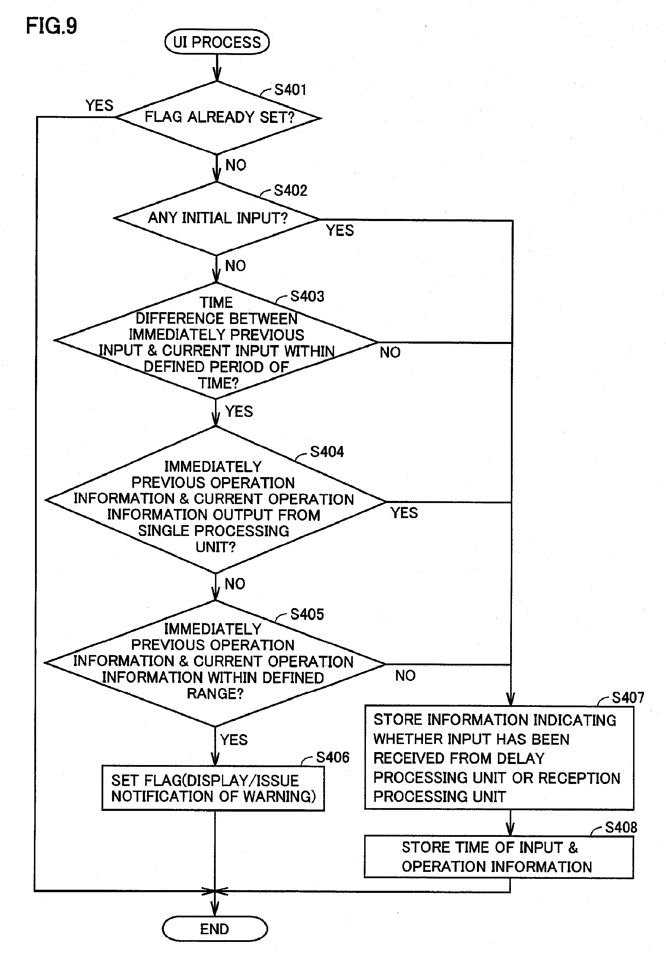

Fig. 9 is a flow chart of a procedure of the UI process performed by the comparison unit in the mobile phone according to the present embodiment. Initially, control unit 106 functioning as comparison unit 106J determines whether flag 103B2 has a value already set (5401). If so, control unit 106 ends the process. If the flag is reset, control unit 106 proceeds to a subsequent step (S402).

Then, control unit 106 determines whether operation information input is initially input operation information (S402), and if so (YES in Step S402), then there is not any operation information of any immediately previous operation to be compared, and control unit 106 proceeds to Step S407 described later. Otherwise (NO in Step S402), control unit 106 proceeds to a subsequent step (S403).

Then, control unit 106 determines whether the operation information that is immediately previously input and the operation information that is currently input are those input at a single point in time (or with a small difference in time therebetween) (S403). If control unit 106 determines otherwise (NO in Step S403), control unit 106 proceeds to Step S407 described later. If control unit 106 determines that they are input at a single point in time (YES in Step S403), control unit 106 proceeds to a subsequent step (S404).

Then, control unit 106 determines whether the operation information that is immediately previously input and the operation information that is currently input are both output from a single processing unit, i.e., delay processing unit 106C or reception processing unit 106H (S404). If so (YES in Step S404), control unit 106 proceeds to Step S407 described later. Otherwise (NO in Step S404), control unit 106 proceeds to a subsequent step (S405).

Then, control unit 106 determines whether the operation information that is immediately previously input and the operation information that is currently input correspond to identical positions, respectively, (i.e., identical coordinates, respectively, more specifically, touched coordinates, respectively, adjacent to each other) (S405). If not (NO in Step S405), control unit 106 proceeds to Step S407 described later. If so (YES in Step S405), control unit 106 sets flag 103B2 at a value and notifies the user that there is a possibility that the state of what is displayed by the terminal of interest A and that of what is displayed by partner terminal B are inconsistent (Step S406).

Note that rather than issuing the notification when it is determined that there is a possibility that displayed screens have inconsistency, control unit 106 may for example determine the value of flag 103B2 in storing the displayed screens, and issue the notification if the flag is set.

Finally, when control unit 106 determines through the above decision steps S402-S405 that there is no inconsistency, control unit 106 stores which processing unit has output the operation information that is currently input, the time at which the operation information that is currently input is input, and the operation information that is currently input, to storage unit 103 in order to determine whether there is inconsistency when subsequent operation information is input (S407, S408).

Main display processing unit 106A, sub display processing unit 106D and comparison unit 106J described above receive operation information input from two processing units, (for example, comparison unit 106J receives operation information input from delay processing unit 106C and operation information input from reception processing unit 106H), and accordingly, it is necessary to determine which processing units input the operation information.

Furthermore, there is a case in which two pieces of operation information are input at a single point in time (more precisely, for comparison unit 106J, subsequent operation information is input while the Fig. 9 steps S401-S406 are performed).

Accordingly, before operation information is output to each processing unit, the operation information is buffered by each processing unit that outputs the operation information, and once each processing unit that receives the operation information has completely processed the operation information, the operation information is discarded.

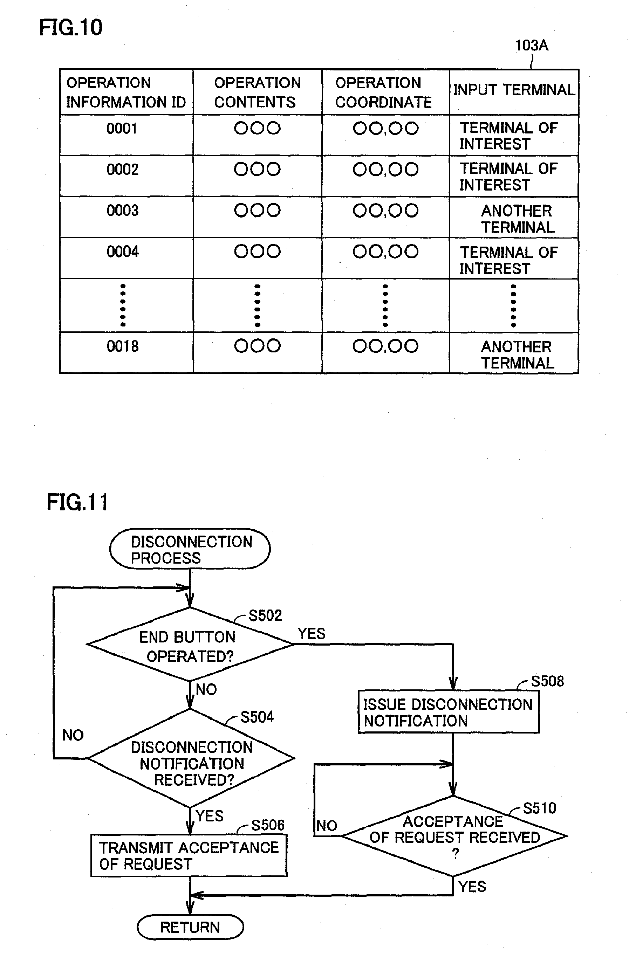

Fig. 10 represents a data structure of buffered operation information input to the comparison unit.

In the figure, "operation information ID" indicates information indicating in what order operation information is processed, and after Steps S407 and S408 are performed, the operation information is deleted, and other operation information's operation information ID is decremented.

Furthermore, "operation contents" indicates information of types of pens indicating drawings' (or pens') colors, thicknesses and the like, and "operation coordinate" is information indicating an operated (touched) coordinate.

Furthermore, "input terminal" is information indicating whether an operation is an operation done to tablet 119 of a terminal of interest or an operation done to a tablet of a partner terminal, i.e., for comparison unit 106J, a "terminal of interest" means an output from delay processing unit 106C and "another terminal" means an output from reception processing unit 106H.

### < Disconnection Process in First Mobile Phone 100A>

In the present embodiment first mobile phone 100A performs the disconnection process, as will be described hereinafter. Fig. 11 represents a procedure of the disconnection process in first mobile phone 100A according to the present embodiment.

As shown in Fig. 11, control unit 106 determines whether input unit 110A has an end button operated (Step S502). If not (NO at Step S502), control unit 106 determines whether a disconnection notification has been received from second mobile phone 100B through communication device 101 (Step S504). If so (YES at Step S504), control unit 106 transmits to second mobile phone 100B a message indicating that the disconnection is accepted (Step S506), and control unit 106 ends the disconnection process. If control unit 106 does not receive the disconnection notification (NO at Step S504), control unit 106 repeats Step S502 et seq.

On the other hand, if the end button is operated (NO at Step S502), control unit 106 notifies second mobile phone 100B through communication device 101 that P2P communication will be severed (Step S508). Control unit 106 determines whether a message indicating that the disconnection has been accepted has been received through communication device 101 (Step S510). If the message is received (YES at Step S510) control unit 106 ends the disconnection process. Otherwise (NO at Step S510), control unit 106 repeats Step S510 et seq.

### <Other Embodiments>

It is needless to say that the present invention is also applicable to a case achieved by providing a system or a device with a program. The present invention's effect can also be exploited in such a manner that a storage medium having stored therein a program represented by software for achieving the present invention is provided to a system or a device and a computer (or CPU or MPU) of the system or device reads and executes a program code stored in the storage medium.

In that case, the program code per se read from the storage medium will implement the function of the above described embodiment, and the storage medium having the program code stored therein will configure the present invention.

The storage medium for providing the program code can for example be a hard disc, an optical disc, a magneto-optical disc, a CD-ROM, a CD-R, a magnetic tape, a non-volatile memory card (an IC memory card), ROMs (mask ROM, flash EEPROM, or the like), or the like.

Furthermore, it is needless to say that not only can the program code read by the computer be executed to implement the function of the above described embodiment, but a case is also included in which in accordance with the program code's instruction an operating system (OS) running on the computer performs an actual process partially or entirely and that process implements the function of the above described embodiment.

Furthermore, it is also needless to say that a case is also included in which the program code read from the storage medium is written to memory included in a feature expansion board inserted in a computer or a feature expansion unit connected to the computer, and subsequently, in accordance with the program code's instruction, a CPU included in the feature expansion board or the feature expansion unit performs an actual process partially or entirely and that process implements the function of the above described embodiment.

It should be understood that the embodiments disclosed herein are illustrative and non-restrictive in any respect. The scope of the present invention is defined by the terms of the claims, rather than the description above, and is intended to include any modifications within the scope and meaning equivalent to the terms of the claims.

### DESCRIPTION OF THE REFERENCE SIGNS

1: network system, 100, 100A, 100B, 100C: mobile phone, 101: communication device, 103: storage unit, 106: control unit (CPU), 106A: main display processing unit, 106C: delay processing unit, 106D: sub display processing unit, 106E: determination unit, 106F: tablet input processing unit, 106G: transmission processing unit, 106H: reception processing unit, 106J: comparison unit, 106K: buffering unit, 106L: unbuffering unit, 107: main display 107A: first display area, 107B: second display area, 108: sub display 109: speaker, 110: operation unit, 110A: input unit, 119: pen tablet, 120: stylus pen, 200: car navigation device, 300: personal computer, 400: matching server, 500: internet network, 600: mail server, 700: carrier network.

## Claims

1. A communication terminal (100) connectable to another communication terminal via a network, comprising:
an output unit (111) including a display;
an input unit (110A) for inputting first operation information;
a communication device (101) for transmitting said first operation information to said other communication terminal via said network and receiving second operation information from said other communication terminal via said network;
a first output control unit (106A) for causing said display to output first information, based on said first operation information, in a first area (107A) of said display when said first operation information is input, and for causing said display to output second information, based on said second operation information, in said first area of said display when said second operation information is received; and
a comparison unit (106J) for making a comparison between a time when a predetermined time has passed since said communication terminal received said first operation information and a time when said communication terminal receives said second operation information, and causing said output unit to output third information based on a result of said comparison.

2. The communication terminal according to claim 1, further comprising a second output control unit (106D) for causing said display to output said first information at a second area (107B) of said display when said time at which said first operation information is input plus said predetermined period of time is reached, and for causing said display to output information, based on said second operation information, at said second area of said display when said second operation information is received.

3. A control method in a communication terminal connectable to another communication terminal via a network, said communication terminal including an output unit including a display, an input unit, a communication device, and a control unit, comprising the steps of:
said control unit receiving first operation information input via said input unit;
said control unit causing said display to output first information, based on said first operation information, in a first area of said display;
said control unit transmitting said first operation information to said other communication terminal through said communication device;
said control unit receiving second operation information from said other communication terminal through said communication device;
said control unit causing said display to output second information, based on said second operation information, in said first area of said display;
said control unit making a comparison between a time when a predetermined time has passed since said communication terminal received said first operation information and a time when said communication terminal receives said second operation information; and
said control unit causing said output unit to output third information based on a result of said comparison.

4. A control program for controlling a communication terminal connectable to another communication terminal via a network, said communication terminal including an output unit including a display, an input unit, a communication device, and a control unit, said control program causing said control unit to perform the steps of:
receiving first operation information input via said input unit;
causing said display to output first information, based on said first operation information, in a first area of said display;
transmitting said first operation information to said other communication terminal through said communication device;
receiving second operation information from said other communication terminal through said communication device;
causing said display to output second information, based on said second operation information, in said first area of said display;
making a comparison between a time when a predetermined time has passed since said communication terminal received said first operation information and a time when said communication terminal receives said second operation information; and
causing said output unit to output third information based on a result of said comparison.
